# EUROPEAN PATENT APPLICATION

(11) **EP 0 971 137 A1**
(43) Date of publication of application: **12.01.2000**
(21) Application number: 99201966.1
(22) Date of filing: 18.06.1999
(51) Int. Cl.: F16B 37/04

(54) **Self-restraining captive nut**

(30) Priority: 06.07.1998 IT MI980464 U
(71) Applicant: Urama S.r.l., 20048 Carate Brianza (Milano) (IT)
(72) Inventor: Perego, Giuseppe, 23893 Cassago Brianza, Lecco (IT)
(74) Representative: Martegani, Franco

(57) **Abstract**

A nut (11;111)/cage (12;112) assembly, in which said cage (12;112) containing said nut (11;111) comprises: a base (13;113) provided with a hole (14;114) for receiving a bolt (15) and, in an opposite position with respect to said base (13;113), elastically yielding retaining and engaging means (17;117) for holding fast the nut (11;111) inside said cage (12;112) and for securing the nut (11;111)/cage (12;112) assembly onto a component (19) to be fixed. According to the invention, said assembly comprises restraining means (22; 114,114a) which are capable of opposing loosening of the joint formed by means of said nut (11;111) and bolt (15).

## Description

The present invention relates to a self-restraining captive square nut which may be either square or round and which is capable of solving in an extremely simple and low-cost manner the problem of loosening of the joint, in particular in all those cases where the nut-bolt assembly is subject to high stresses, such as vibrations, arising for example from the movement of a motor vehicle on a road surface.

As is well-known to persons skilled in the art, so-called "captive" nuts are used in all those fixing systems where it is not possible to keep the nut locked in position during the bolt screwing operation and where it is not considered appropriate to fix the nut in a permanent manner (for example by means of welding) to one of the parts to be assembled.

These captive nuts are used mainly to join together box-shaped components, tubular profiles and/or in all those cases where there is difficult access on both sides of the joint to be provided.

The cage containing the nut has the function of keeping the nut itself in position during the bolt screwing and tightening operation. Said cage is secured to one of the components to be joined together, for example the metal sheet of a motor vehicle body, by means of systems of various types.

In any case, the operating principle of the system for securing the cage to the metal sheet which must be fixed is based on the elastic return movement of one or more tongues which are bent so as to be introduced into a hole in the metal sheet and then released once the entire nut/cage assembly has been positioned as required.

Once the bolt has been introduced and tightened so as to assemble the various components of the joint, the captive nut behaves in the manner of any normal nut.

It should also be noted that, in a bolted joint, the axial load which is produced on the bolt does not allow the joint itself to come loose owing to the friction between the threads of the nut and the bolt, which is produced precisely by said axial load.

However, under given operating conditions it may happen that the abovementioned axial load is no longer present, even for infinitesimal periods of time. In such a case, the tension between nut and bolt is not sufficient to prevent loosening of the joint.

This is the case with a component subject to vibrations, as for example the parts of a motor vehicle body, which vibrations, with time, may result in loosening and, in some cases, even separation of the joint.

Another situation which occurs relatively frequently is that of the settling movement of the parts of the joint which may result in the reduction or even in the loss of the abovementioned axial load.

In order to overcome the abovementioned drawbacks associated with loosening of joints subject to vibration, various systems have been proposed.

One of the most commonly used systems is that of combining with the threading of the nut an unthreaded restraining element made of plastic (nylon) or some other material, including metal.

Said restraining element, which is generally annular and fixed to the nut by means of embossing, opposing screwing of the bolt by means of the nut itself, produces considerable friction both between the threads of said nut and bolt and between the threads of the bolt and the restraining ring, for example made of nylon, even when there is no axial load at all.

The friction thus produced creates a force which opposes unscrewing of the bolt, thus overcoming the drawbacks and problems mentioned above.

Persons skilled in the art are familiar with a plurality of types of restraining elements which are different from each other in terms of shape and size.

One of the most commonly used types of restraining element consists of a suitably shaped thin steel plate which opposes screwing of the bolt, producing the same self-restraining effect as a nylon ring.

In so-called captive nuts, the aforementioned self-restraining systems and devices have never been used on account of the particular configuration of the actual captive nuts.

The general object of the present invention is that of overcoming the drawbacks of the known art and, in the light of this object, a self-restraining captive nut having the characteristic features described in the main claim and following claims has been devised.

The structural and operational features of the invention and the advantages thereof compared to the known art will emerge more clearly from an examination of the following description with reference to the accompanying drawings which illustrate examples of practical embodiment of the invention itself and in which:
- Figure 1 is a plan view showing a self-restraining captive square nut, provided in accordance with the innovative principles of the invention:
- Figure 2 shows a partially sectioned elevation view along the plane indicated by II-II in Figure 1;
- Figure 3 is a cross-sectional view showing an example of a joint formed using the self-restraining captive square nut according to Figures 1 and 2; and
- Figures 4 and 5 are two views, similar to those of Figures 1 and 2, showing another self-restraining captive nut provided in accordance with the innovative principles of the invention.

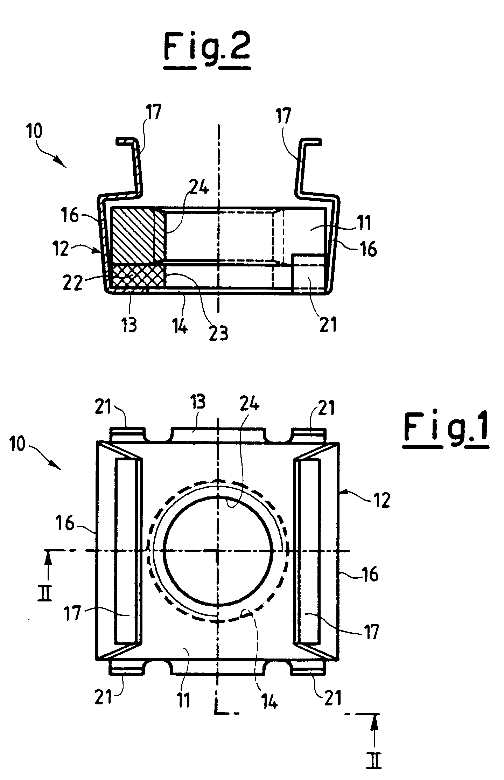

With reference to Figures 1 to 3 of the drawings, a captive nut according to the invention is denoted in its entirety by 10 and is structurally formed by a square nut 11 contained inside a so-called cage 12 which is made - by means of shearing - of elastically yielding metallic material; the assembly consisting of square nut 11 and metal cage 12 is of a type which is well-known to persons skilled in the art.

More particularly, the cage 12 comprises a base 13 which is provided with a hole at 14 so as to receive a bolt 15 which must be screwed into the nut 11.

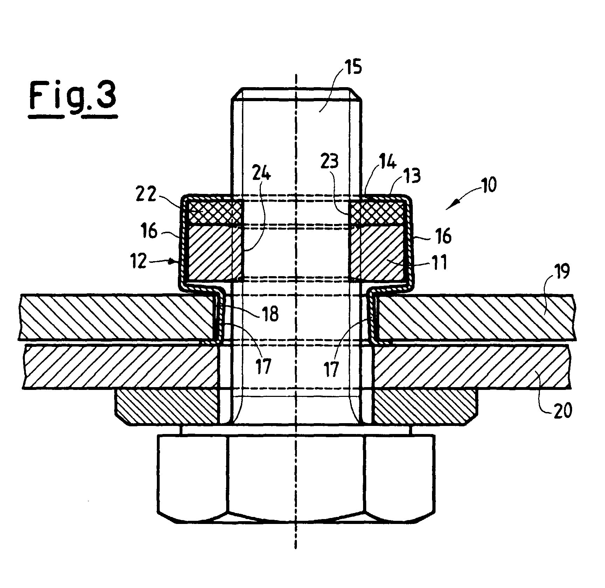

Facing side walls 16 extend on two facing sides of said base 13, in a slightly diverging manner, said walls terminating in shaped hook parts 17 having the dual function both of retaining the square nut 11 and of allowing engagement and relative positioning of the nut 11/cage 12 assembly in a hole 18 formed in one of the two components, for example two sheet-metal components 19, 20 which must be stably joined together (Figure 3).

Retaining of the square nut 11 inside the cage 12 is completed by teeth 21 which extend from the base 13 on the other two sides adjacent to the facing walls 16.

According to the present invention, a self-restraining element 22 is arranged between the nut 11 and the base 13 of the cage 12.

Said self-restraining element 22, like the nut 11, is square and is provided with a hole, at 23, coaxial with the threaded hole 24 of the nut 11 itself.

In the example shown, the self-restraining element 22 is made of nylon.

In the example shown, the same cage 12 integrally joins said self-restraining element 22 to the nut 11 so that, when the bolt 15 is tightened by means of the nut 11, the bolt 15 itself engages with the self-restraining element 22, rotation of which, as well as that of the nut 11, is prevented by the cage 12. Thus it is clear how any relative rotation of bolt 15 and self-restraining element 22 - which is caused for example by the vibrations to which the metal sheets 19, 20 are subject - produces a restraining moment such as to prevent mutual unscrewing of nut 11 and bolt 15 and hence loosening of the joint in question.

In the example described and illustrated in Figures 1 to 3, the non-circular (square) shape of the self-restraining element 22 does not allow rotation of the latter with respect to the matching cage 12. In other cases (for example nuts with a round cage), the self-restraining element, for example a nylon ring, must be suitably secured to the round body of the nut, so as to avoid the occurrence of relative rotation of nut and self-restraining element.

It is also envisaged that the self-restraining element 22 may consist of a thin steel plate. In such a case, said thin steel plate could also be formed in the cage 12 itself.

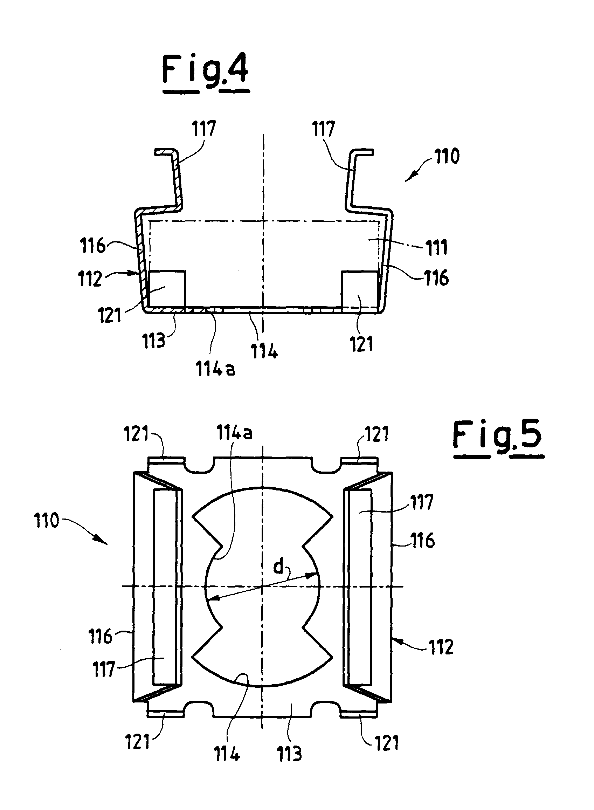

Figures 4, 5 (where components identical and/or similar to those shown in Figures 1-3 are indicated by the same reference numbers multiplied by 100) show respectively a partially sectioned elevation view and a plan view of another captive nut 110 formed using the same innovative principles of the invention.

More precisely, in the captive nut 110 according to Figures 4, 5, the self-restraining element is formed as one piece with the base 113 of the cage 112. In fact, as can be clearly seen from Figure 5, a shaped hole 114 is formed in the base 113, said hole having a portion 114a with a diameter "d" which is identical to the diameter of the core of the threading of the nut 111. In this way, the portion 114a will exert a restraining action on the bolt screwed into the nut.

The object mentioned in the preamble of the description is thus achieved.

The scope of the invention is defined by the following claims.

## Claims

1. A nut (11;111)/cage (12;112) assembly, in which said cage (12;112) containing said nut (11;111) comprises: a base (13;113) provided with a hole (14;114) for receiving a bolt (15) and, in an opposite position with respect to said base (13;113), elastically yielding retaining and engaging means (17;117) for holding fast the nut (11;111) inside said cage (12;112) and for securing the nut (11;111)/cage (12;112) assembly onto a component (19) to be fixed, characterized in that said assembly comprises restraining means (22; 114,114a) which are capable of opposing loosening of the joint formed by means of said nut (11;111) and bolt (15).

2. Assembly according to Claim 1, characterized in that said restraining means consist of a restraining element (22) provided between the base (13) of the cage (12) and the nut (11).

3. Assembly according to Claim 2, characterized in that said restraining element (22) is located between the base (13) of the cage (12) and the nut (11).

4. Assembly according to Claim 2, characterized in that said restraining element (22) consists of a nylon element provided with a hole as indicated at (23) and located between said nut (11) and said base (13) and having the same configuration as the nut (11).

5. Assembly according to Claim 2, characterized in that said restraining element (22) is a metal element.

6. Assembly according to Claim 1, characterized in that said nut (11) is a square nut and is contained in a cage (12) having a matching configuration and in that said restraining means (22) have the same square configuration as said nut (11).

7. Assembly according to Claim 1, characterized in that said nut is round and is contained in a cage having a matching configuration and in that said restraining means have the same configuration as the nut and are attached thereto so as to prevent the mutual rotation thereof.

8. Assembly according to Claim 1, characterized in that said restraining means are formed as one piece with said base (113) and consist of a shaped hole (114) having a portion (114a) with a diameter "d" identical to the diameter of the core of the threading of the nut (111), so that said portion (114a) exerts a restraining action on the bolt screwed into the nut.
